# EUROPEAN PATENT APPLICATION

(11) **EP 2 034 053 A1**
(43) Date of publication of application: **11.03.2009**
(21) Application number: 07730351.9
(22) Date of filing: 01.03.2007
(51) Int. Cl.: C25B 1/04, C25B 11/00, C25B 15/02, C25B 15/08

(54) **EQUIPMENT AND METHOD FOR OBTAINING GASES BY MEANS OF THE ELECTROLYSIS OF WATER**

(30) Priority: 16.05.2006 ES 200601243
(71) Applicant: Diewersol, S.L., 08170 Montornes del Valles (ES)
(72) Inventor: GAIG GOMEZ, Javier, E-08170 Montornes del Valles (ES)
(74) Representative: Morgades y Manonelles, Juan Antonio
(86) International application number: PCT/ES2007/000110
(87) International publication number: WO 2007/132035

(57) **Abstract**

The invention refers to an innovative procedure or to obtain a blend of gases comprising hydrogen and oxygen from the process of water electrolysis. The invention contains compact equipment used to undertake this procedure essentially formed by an electrochemical reactor inside which the aforementioned electrolysis occurs and other devices associated with the reactor including a dehumidifier for gases and cooling condensed water, plus methods to automatically load water into the reactor and safety devices.

## Description

The invention refers to an innovative procedure or to obtain a blend of gases comprising hydrogen and oxygen from the process of water electrolysis. The invention contains compact equipment used to undertake this procedure essentially formed by an electrochemical reactor inside which the aforementioned electrolysis occurs and other devices associated with the reactor including a dehumidifier for gases and cooling condensed water, plus methods to automatically load water into the reactor and safety devices.

The invention has the purpose of optimally using gases (oxygen and hydrogen) obtained from electrolysis of water within an electrolytic reactor to be used in many industrial applications such as combustion of the same or in combination with other gases due to their high calorific power and their highly environmentally friendly nature.

This equipment has been designed to obtain a pure blend of hydrogen and oxygen gases generated from electrolysis of water. This guarantees complete safety against possible implosions and includes a minimum number of parts to save manufacturing costs. The invention is compact and manageable reducing energy and electricity cost to a maximum. It is also versatile and can be applied for different applications as detailed in the explanation below.

Preferably, the equipment has been designed for the combustion of the resulting gas mixture to be used in different applications for example welding due to the fact that such blend has a high calorific power and is environmentally friendly. However, this equipment may be used advantageously for other numerous and varied industrial processes such as generating thermal energy (steam, hot water, hot air) or for converting the gases in a boiler or in combination with other contaminating exhaust gases from other processes, due to the fact that when these two gases are mixed they degrade and purify contaminating gases.

Electrolysis is a well-known process and is based on supplying electrical energy, generally generated from a galvanic battery or direct current generator, into an electrolytic solution comprising a solute, a solvent and suspensions. It is necessary to dissolve a substance in a predetermined solvent in order for the ions in such substance to be present in the solution. The electrical current is applied to a pair of conductive electrodes in the solution; the negatively charged electrode is known as a cathode and the positive electrode as the anode. Each of these electrodes attract opposite the charged ions so that positive ions or cations are attracted to the cathode while the negative ions or anions move to the anode. The energy required to separate these ions and increase their concentration on the electrodes comes from electrical power source which maintains the power difference in the electrodes. Therefore, electrons are absorbed into the electrodes or emitted by the ions, forming concentrations of the elements or compounds required.

In the specific case of water electrolysis, hydrogen is formed on the cathode, oxygen on the anode and water vapour. This was discovered in 1833 by Michael Faraday.

The reaction of water electrolysis is not a spontaneous process and therefore is undertaken by an electrolytic cell or reactor which is an electrochemical system generating substances by the action of the flow of electrons supplied by the external voltage source.

The decomposition of water into gaseous oxygen and gaseous hydrogen, in one and two volumes respectively, may occur at different temperatures using different electrolytes depending on the final use of the aforementioned decomposition.

The more common uses of decomposition of water using electrolysis are to obtain hydrogen from separating water to be used in the electronics, pharmaceutical or food industries, purifying waste water to extract contaminating substances contained in the water.

In 1971 Dr. Yull Brown in Australia began research on the electrolysis of water which culminated in the invention of the gas blend generator for hydrogen and oxygen known under the name of oxyhydrogen gas. This was registered under US patent No. 4081656. From then on new theories began to be developed on the implosion properties of the oxyhydrogen gas.

The "dry" gaseous mixture of hydrogen and oxygen, that is to say without moisture, has several attractive benefits compared to other conventional gases which are currently being used in different applications particularly as a fuel.

The main attributes of this gaseous mixture is the flame temperature which can reach extremely high temperatures of approximately 3600º C, which are in excess of those for tungsten. Moreover when the gas combusts only water is generated as a product of the combustion and therefore no contaminating gas is produced into the environment.

It is for this reason that obtaining the gaseous mixture known as oxyhydrogen gas is currently seen as a hugely important area of development especially with boilers, ovens, heaters or for the combustion or use of such gas.

At the moment the main difficulty with the gaseous mixture (hydrogen and oxygen) is that it is particularly difficult to check once they have been mixed given that an implosive reaction can easily occur which cannot be controlled due to its high flammability.

Another drawback connected with obtaining this gaseous blend is that the current is applied during electrolysis. The output gas flow inevitably heats up until it reaches temperatures between 50-60º C, combined with the fact that it contains a combination of hydrogen gas and oxygen gas molecules in the water vapour, means that in order to obtain the "dry" or "pure" mixture of gases required the aforementioned water vapour must first be condensed.

In the state of the art there are different pieces of equipment for the controlled and safe manufacture of the hydrogen oxygen gas blend generated from and electrochemical reactor for different applications. This equipment comprises different parts connected to each other.

The majority of recently developed oxyhydrogen gas manufacturing equipment, the water condensed by any method contained in the gaseous output mixture from the reactor is not evacuated from the equipment but is redirected to the reactor to be re-used. Thus, the reactor's water consumption is significantly reduced due to this recycling of water. Nonetheless, the electrolytic fluid consumed by the reactor comprising distilled water and electrolytic water must always be at a constant temperature to guarantee the equipment's maximum efficiency. Therefore the water must be cooled to a predetermined temperature before it is returned to the reactor.

For example, patent PCT No. WO 02095090 details equipment to obtain a gaseous blend from electrolysis of water which includes a dehumidifier to extract water vapour from the gaseous mixture when it leaves the reactor and then a gas blender to oxyhydrogen gas from the mixture of oxygen and hydrogen gases.

However, each method of setting up the device for such purposes is very complex in terms of the number of components and is also high in added energy costs given that in the majority of cases different independent gas storage tanks, condensers or water vapour dehumidifiers are required for the fluid produced by electrolysis. Ventilators to cool the condensed water returning to the electrolytic reactor to be used in subsequent electrolytic cycles or gas blenders are also required.

One of the aims of this invention is to obtain a procedure and equipment capable of dehumidifying water vapour contained in the gaseous fluid mixture and at the same time is capable of self cooling.

Another aim of this invention is to ensure that the procedure and equipment in the invention guarantee maximum safety from possible implosions of the gaseous mixture contained inside the equipment.

Another aim of this invention is to have compact, sealed and easily manageable equipment for the user.

Another aim of this invention is to have equipment fitted with an automatic water filling system plus the option to fill by hand.

Another aim of this invention is to have equipment without electrical and electronic safety equipment fitted.

Another aim of this invention is to have equipment fitted with a fluid, pressure and temperature level control system.

Another aim of this invention is to have equipment capable of being connected to different applications, preferably gas combustion using any standard system, such as for example conventional burners.

This invention has the aim of modifying the management and handling of the gas mixture once it has been generated by an electrochemical reactor in order to remove all existing thermal apparatus, to remove consumption by and therefore the overall cost of the equipment, in addition to ensuring the total safety of equipment against implosions by the gas mixture.

Improvements in this patent consist of designing compact equipment to generate a gaseous mixture of hydrogen and oxygen which includes and electrolytic device where such gaseous mixture is generated plus a means of dehumidification to condense the water vapour contained in the aforementioned mixture, self cooling means to chill condensed water returning to the reactor, automatic means of filling the electrochemical reactor with water, means to self-regulate pressure and temperature in the gaseous mixture and safety means to prevent the propagation of flames once the mixture has been created.

The electrolytic device is formed by and electrolytic reactor in a container filled with water, plus a conductive solution and more suspensions into which there are a plurality of conductive or semi-conductive plates placed in line, in addition to a fluid inlet and outlet. Inside or outside equipment there is a power source connected between the two plates located on the end positions so that the remaining plates are positively and negatively charged forming hydrogen gas and oxygen gas separately within the reactor. However as there is no physical barrier between the cathodes and anodes, these gases are mixed together to form oxyhydrogen gas within the reactor.

More specifically, the electrolytic device is an electrolytic cell device which comprises conductive or semiconductive plate racks laid out in series (one beside the other in parallel) and interspersed with insulating separating plates between two contiguous plates. The two conductive or semiconductive plates located on the ends are directly or indirectly connected to a power source which applies a power difference between the same. The insulating separators and the conductor mean that all conductive or semiconductive plates are charged positively on one side and negatively on the other. Therefore, each of the reactor's plates plays the role of a cathode on one side hand and anodes on the other side. These plates are located within a reactor which is slightly polyhedral in shape formed by the container which is preferably prismatic and without its front base. This container is equipped with an edge around the perimeter which overhangs the opposing side walls of the container forming the rear face of the container. This edge extends perpendicular to these side faces. This overhanging edge is designed to allow the electrolytic device to be sealed on its front section.

The two conductive or semiconductive plates located on the ends may be indirectly connected to a power source, for example connected to a terminal on the front cover with the other being connected to the reactor's container.

In order to close the reactor with a seal and to prevent fluids leaking out of the same, there is a joint which perfectly fits into the front surface of the aforementioned perimeter edge.

Finally on this seal there is a front cover plate which completely closes the front of the reactor. This seal has electro-thermal fuse nearby on one of its edges which a dual purpose: Firstly it breaks the electrical current in the event of excessive temperature increase within the reactor and secondly it breaks the electrical current in the event of an electrical fault while the equipment is operating.

Preferably the front cover plate, seal joint and container should include a plurality of holes in line to receive safety bolts and the reactor's seal to close off the electrolytic device. The front cover plate has these holes near to the perimeter edge, the seal joint includes them along the same and the container includes them along its overhanging edge.

The electrolytic device described above has a distilled water inlet preferably on the lower section of the rear face of the container and a gas outlet from the electrolysis process preferably on the upper part of the rear face of the container. It is necessary that the container's fluid inlet is on the and the gas outlet is on the upper section of the container to ensure the correct removal of the gas flow from the reactor.

The electrolytic solution consumed by the aforementioned reactor must be conductive; Therefore it is necessary to add a predetermined percentage of a compound preferably an alkaline substance such as potassium hydroxide. This alkaline substance must be added by hand into the equipment at certain intervals.

The advantages of having means connected to the electrolytic reactor's outlet including dehumidifiers, self cooling condensed water devices and flame propagation barriers, is to have an upper circuit of conductors where the gaseous mixture circulates from the reactor which is then cooled and condensed while it is passing through such circuit; plus a lower conductive circuit which collects condensed water formed by the same number of conductors in the upper circuit. Both of these circuits are joined together using conduit union racks

Preferably these dehumidifier, condensed water self cooling and flame barrier means are located above the reactor.

The upper conductive circuit is formed by a plurality of conductors laid out in series along the upper edge of the equipment. These are equipped with sections in which pipes are coiled by at least one turn. However, the may be coiled by more than one complete turn forming a spiral shape. These curved sections on the lower part have the advantage of depositing part of the condensed water with the remaining water dropping through the joint conduits to the lower conductive circuit.

The lower conduits circuit is formed by a plurality of ducts laid out in series along the lower section of the equipment. These collect condensed water at each section of the upper circuit and return them to the reactor.

There is a joint conduit connecting the upper and lower circuit located in the joints between the two upper contiguous conduits and the two lower contiguous conduits. The joint conduit is the conduit for gases connecting the reactor's gas outlet with the upper conduit. The remaining joint conduits channel condensed water from the lower circuit to the lower conduit circuit. The aforementioned joint conduits are partially filled with electrolytic fluid, that it is say water plus electrolyte, to decrease the amount of specified gaseous mixture located in the equipment and therefore the risk of the gaseous mixture imploding plus the fact that it enhances condensed water flow rates along the lower circuit.

When conducting the gaseous mixture from the electrolytic reactor at a temperature above ambient temperature, for example 50°C, along narrow tubes, the temperature of the aforementioned fluid will progressively decrease due to heat exchange from conduction and convection with the external air until it reaches a temperature close to ambient temperature in the final section of the conduits. This means that the water self-cools with the exterior without the need to include any form of fan or other equivalent thermal equipment.

Due to the fact that the gaseous mixture contains a certain percentage of water vapour, when the temperature drops below the dew point temperature, the moisture contained in the gaseous mixture condenses into liquid water so that the gaseous mixture self condenses without the need for additional thermal equipment.

Moreover, by conducting the gaseous mixture along small diameter pipes there are no areas where a large amounts of gaseous mixture can accumulate so that the risk of the gaseous mixture imploding is completely reduced.

Furthermore, the curved sections in the pipes, preferably one curved section per conduit, act as a siphon so that the water condenses along the upper horizontal conduit and accumulates in the same. When a certain amount of water is deposited in these sections of pipes, they act as a flame barrier which impedes flame propagation along the upper circuit. It also acts as an anti-return system.

The number of gas conduits in the upper and lower circuit is the same and shall depend on the requirements of each piece of equipment; nonetheless, as a minimum there should be one per circuit.

The gaseous mixture in the upper circuit and the condensed water in the lower circuit flow in the same direction.

Means of automatically filling the reactor with water are located in the upper section of the general water lowering conduit. This comprises a water level regulating valve in the form of a ballcock which operates jointly with a force pump, which uses the flow of the dry gas mixture from the upper circuit outlet as a means of self pumping the required distilled water flow from a distilled water tank to the electrolytic reactor.

The operation of force pumps is based on inserting a two valve anti-return system pump in a favourable position so that while the aspiration closes the other opens reversing its function when compression is produced.

The hydropneumatic operation of the automatic filling device is based on the flow of upper conduit circuit outlet gases passing through the regulating valve to the upper section of the pump. The difference in pressures between the two sides of the piston drives the water flow from the distilled water tank to the reactor's container. The opening or closing of the gas passage using the regulating valve is governed by the ballcock which allows the gas to pass or closes it off depending on the level of electrolytic fluid contained inside the reactor. For example, in this way, when the user requires an increase in demand for gas by the equipment, the voltage between the cathodes and anodes in the electrochemical reactor will increase and therefore gas production and water consumption will also increase; then, the water level in the reactor will decrease and therefore the water level regulator will pump in a certain amount of water. On the other hand, when the container is full of water up to a level over that of the reactor's upper limit, the level of electrolytic fluid will rise in proportion to the increase and the regulating valve ballcock will close the valve. This prevents the passage of gas to the pump and prevents distilled water from being pumped from the tank to the reactor.

The ballcock regulating the valve is connected at the base to one of the sides of the reactor and will be half filled with electrolytic fluid. This comprises a slightly extended body with two openings: the first is connected to the gas outlet conduit on the upper circuit and the second is connected to the upper section of the pump. Inside it has a float hand and an O-ring located on top of the float. In this way, if the fluid level inside the valve is below the O-ring, the float does not touch the 0-ring and the gases pass through the valve due to the existing pressure differences. When the gases pass through the upper section of the pump, they exercise a pressure on the upper part of the piston. The pressure differences between the two sides of the piston causes a predetermined amount of water to be driven from the tank to the reactor. On the other hand, if the fluid level in the valve goes up and the float presses against the O-ring, the gas passage is closed off through the valve which means that the pressure in the upper section of the pump decreases and the piston returns to its upper end position because of a hole in the upper part where the gas is expelled and also because of the elastic force of a spring.

Advantageously in order to avoid the oscillating movement of the float against the O-ring, called hysteresis, there is a counterweight on the lower part of the float equipped with a magnet and a fixed metal ring around the middle of the valve's body so that when the float reaches the middle position in the valve the counterweight is held against the ring and remains immobilised in this position allowing the gas to pass through the valve. When the reactor's container is being filled with the electrolytic fluid the level of water will continue to increase and at some point the water will exercise sufficient force to release the float's counterweight from the valve ring causing the valve to close.

Alternatively the counterweight on the float may be made from metal and the ring in the valve may be fitted with a magnet.

The lower part of the piston pump is connected to two anti-return valves which connect the distilled water tank to the water down conduit towards the reactor: the first valve is connected on one side to the tank and on the other side to the piston pump. The second is connected on one side to the piston pump and to the water down conduit on the other.

Preferably the distilled water tank is located outside the equipment.

The benefits of using a force pump operated by the gas itself is that there is no additional energy cost which therefore decreases the costs for the equipment detailed here.

However, as an alternative, the automatic means of filling the water in the reactor may comprise electrical or electronic devices.

Means of self regulating outlet gas pressure in the equipment comprise a pressure regulating valve connected on one side to a pressure safety valve and on the other to a water safety valve. These means are connected to the upper circuit gas outlet conduit just before the outlet from the equipment.

The pressure regulating valve is used to maintain pressure within a preset pressure range regardless of the flow rate passing through it.

The pressure safety valve is used to detect pressures above a certain reference value and is connected on one side to an alarm which is set off when this limit is exceeded and on the other to a discharge system. This discharge system comprises two independent conduits: one connects the gas outlet conduit to the outside of the equipment and the other connects the gas outlet conduit with the distilled water tank. The purpose of these discharge conduits is firstly to discharge gas outside the equipment in the event of overpressure and on the other to remove outlet gas conduit water if the water is sent backwards by the water safety valve.

The water safety valve allows the gaseous mixture to be released outside the equipment to prevent liquid water from being released to the gas line.

Preferably the water safety valve has a slightly spherical device with two stops located on top of the aforementioned device, so that when gas passes through the valve the spherical device floats because of its density and allows gas to pass through the aforementioned valve. On the other hand, if liquid water mixed with outlet gases still remains, this liquid water shall push the spherical device up to the upper stops to close off the passage of fluid to the exterior and the water will return to the distilled water tank through the conduit in the pressure valve.

All of the equipment described above comes in a compact and portable housing, preferably in a cellular polycarbonate container as stated in existing safety laws; except for the distilled water tank which is located outside the housing.

As an option, a convenient transport system may be included in the container such as wheels and various accessories such as handles, stoppers, etc.

The compact equipment may have one or preferably more gas outlets given that some specific applications, such as welding, may require to have an additive added to the gas mixture before combustion. Usually two different additives must be added which leads to different storage difficulties given that they react with each other. As the device has two different gas outlets, each may have a different additive which are mixed in the nozzle which avoids additive non-compatibility problems. An example of a usual additive for welding applications is esterboric gas, which prevents the iron from going rusty.

Conveniently, the specified equipment does not have any electrical or electronic equipment so that electrical risks are avoided.

Due to its many and varied applications, the specified equipment does not have any accessories such as burners, although it has been designed to allow standard burners to be fitted.

The equipment in this invention has a maximum gas pressure throughout the whole equipment of 3.5 bar. This is within the values laid down by current legislation on pressures.

The gas flow rate attained by the equipment will depend on its size: Reactor container capacity, power difference in the power supply source, number of gas pipes, etc.

Other details and characteristics shall be shown throughout the description below referring to drawings attached to this report which show the different parts of the equipment for illustrative purpose but not limiting the invention.

Below is a list of the main parts in the stated equipment showing the number sin the attached diagrams;
(10)- electro-chemical reactor,
(11)- container,
(12)- perimeter edge of container (11),
(13)- ended conductive plates,
(14)- seal joint,
(15)- bolt holes,
(16)- conductive plates,
(17)- insulating separator,
(18)- reactor cover (10),
(19)- electro-thermal fuse,
(20)- water inlet conduit,
(21)- gas outlet conduit,
(22)- gas up conduit,
(23)- intermediate condensed water down conduits,
(24)- general reactor water down conduit (10),
(25)- upper conduits,
(26)- curved conduit sections (25),
(27)- condensed water in sections (26),
(28)- lower conduits,
(29)- dry gas outlet conduit,
(30)- manual filling cap,
(31)- dehumidying and cooling device,
(32)- regulating valve,
(33)- pump,
(34)- distilled water tank,
(35)- pump piston (33),
(36)- piston spring (35),
(37)- gas outlet hole,
(38)- valve float (32),
(39)- valve O-ring (32),
(40)- valve body (32),
(41)- gas inlet conduit,
(42)- valve-pump conduit,
(43)- water loading conduit,
(44)- water level in reactor (10),
(45)- safety valve union conduit,
(46)- pressure regulating valve,
(47)- T-junction,
(48)- water valve,
(49)- pressure safety valve,
(50)- sound alarm,
(51)- external outlet conduits,
(52)- intermediate conduit,
(53)- spherical valve device (58),
(54)- valve stops (58),
(55)- upper circuit,
(56)- lower circuit,
(57)- means of automatically filling water,
(58)- means of self regulating outlet gas pressure,
(59)- gas exhaust conduit,
(60)- water return conduit,
(61)- side face of container (11),
(62)- rear face of container (11), and
(63)- safety bolts in the reactor (10).
Figure 1 is a perspective imploded view of a setup of the electrochemical reactor (10) in accordance with the invention and its constituent parts.
Figure 2 is a partial cross-section view of the side elevation of the reactor (11), showing the distribution of charges (positive and negative) on the plates (16).
Figure 3 is a schematic view in perspective of the dehumidifying and cooling device (31), in accordance with the purpose of the invention.
Figure 4 is a lower plan view of the dehumidifying and cooling device (31), showing the layout of the lower conduits (28).
Figure 5 is a top plan view of the dehumidifying and cooling device (31), showing the layout of the upper conduits (25) and also the curved conduits (26), in accordance with the purpose of the invention.
Figure 6 is a front elevation view of a diagram of the automatic of water filling device (57), in accordance with the purpose of the invention.
Figure 7 is a front elevation view of a diagram of the safety device (58), in accordance with the purpose of the invention.

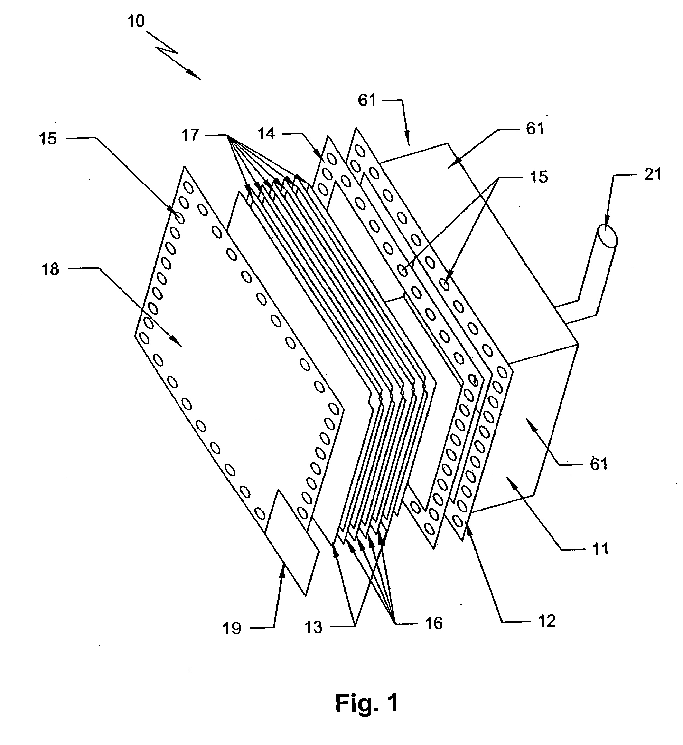

As may be seen in figure 1, the equipment used to obtain a gas mixture using electrolysis of water comprises an electrochemical reactor (10), which is in a completely sealed container into which the electrolytic fluid is placed (water plus electrolyte) to electrolyse the water. This reactor (10) is formed by a prismatic shaped container (11) with a rectangular base and without its front base where there is a front cover plate (18) in a slightly rectangular shape which is slightly thinner to perfectly matching the gap in the front to close off the front of the reactor (10).

Furthermore, the container (11) has a protruding perimeter edge (12) on the four corners of the four opposing side faces (61) of the container (11) forming the rear face (62) of the container (11) with the perimeter edge (12) extending perpendicular to each side face (61).

On the aforementioned perimeter edge (12) there is a seal joint (14) to prevent the electrolytic fluid leaking out of the reactor (10).

The front cover plate (18) has an electrothermal fuse (19) on one of its corners which cuts off the power supply from the equipment if there is an excessive increase in temperature within the reactor or if there is any electrical fault which may damage the equipment.

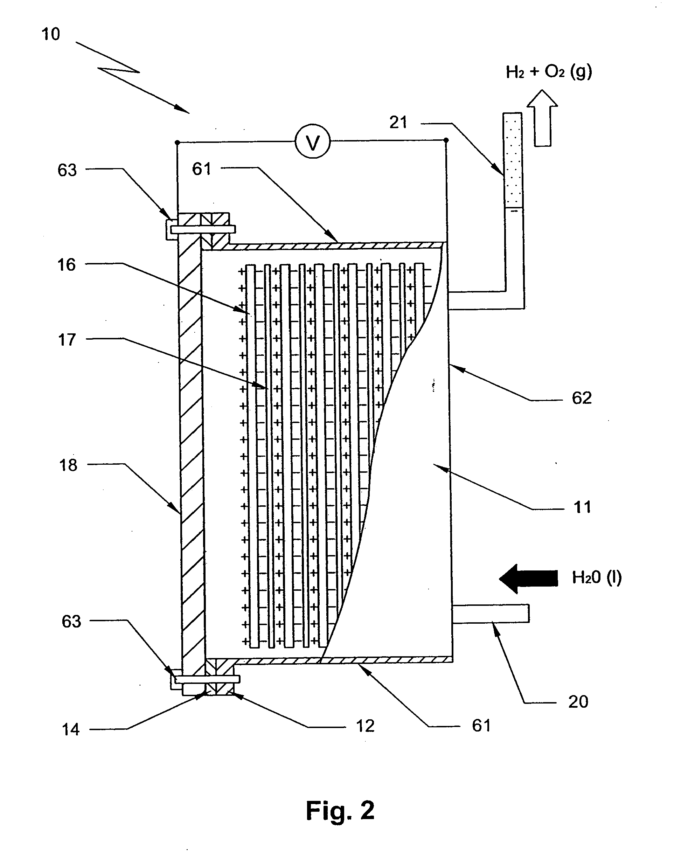

On the inside of the reactor (10) there are fairly thin, slightly rectangular conductive or semi-conductive racks (16) which are laid out in parallel beside each other interspersed with an insulating separator (17) which is also rectangular and of similar size placed between the two contiguous plates (16). The first and last plate (13) is indirectly connected to an external power source which applies a different power between the front cover plate (18) and the container (11), so that the remaining plates (16) in the middle are charged positively on one side and negatively on the other, see figure 2.

There are a plurality of holes (15) made in line, to receive safety and seal bolts (63) in the reactor (10), in order to completely seal the reactor (10) around the perimeter of the cover (18) on the seal joint (14) and container (11) see figures 1-2.

As may be seen in Figure 2, the electrolytic fluid is let (20) in the reactor (10) is located on the lower part of the rear face (62) of the container (11), whereas the gas outlet following electrolysis. (21) is located on the upper section of the same face (62) of the container (11).

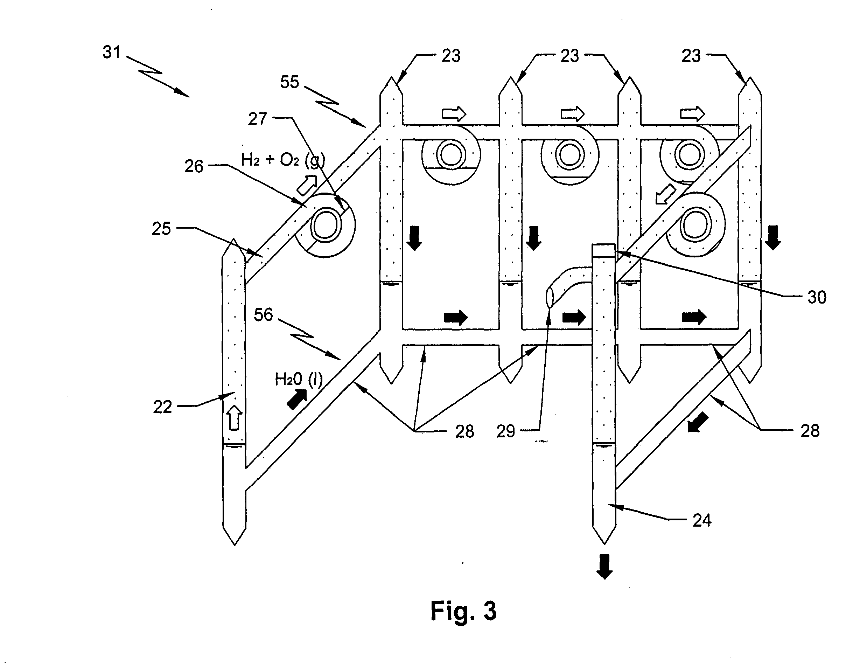

Figure 3 shows the preferred setup for the device (31) to dehumidify and self cool condensed water and to act as a flame propagation barrier connected to the gas outlet in the electrolytic reactor (10). This device (31) has an upper conduit circuit (55) where the gaseous mixture circulates and a lower conduit circuit (56) to collect water condensing in the upper circuit (55), both joined by intermediate water down conduits (23).

The upper conduit circuit (55) is formed by five upper conduits (25) which run in a series along the upper section of the equipment. These include a curved section (26) in each conduit (25). As shown in figure 3, the lower part of these curved sections (26) deposit a certain amount of condensed water (27) with the remaining water descending via the intermediate down conduits (23) and by general water down conduit (24).

The gaseous mixture from the reactor (10) rises through the gas up conduit (22), which is an extension of conduit (21), until it reaches the upper conduit circuit (55) where the mixture circulates in the direction of the arrows shown until it reaches the gas outlet conduit (29). The water condenses along this run and partially accumulates in the lower part of the curved sections (26) with the remaining water descending through the intermediate down conduits (23) until coming out into the general water down conduit (24), which is an extension to the fluid inlet conduit (20) for the reactor (10).

The lower conduit circuit (56) is formed by five lower conduits (28) arranged in a series along the lower section of the equipment. These collect condensed water in each of the sections on the upper circuit (55) and send them in the direction of the arrows shown to the general water down conduit (24) flowing into the reactor (10).

In addition, the final water down conduit to the reactor (24) has a cap (30) on its upper part in order to fill it with water and/or electrolyte by hand.

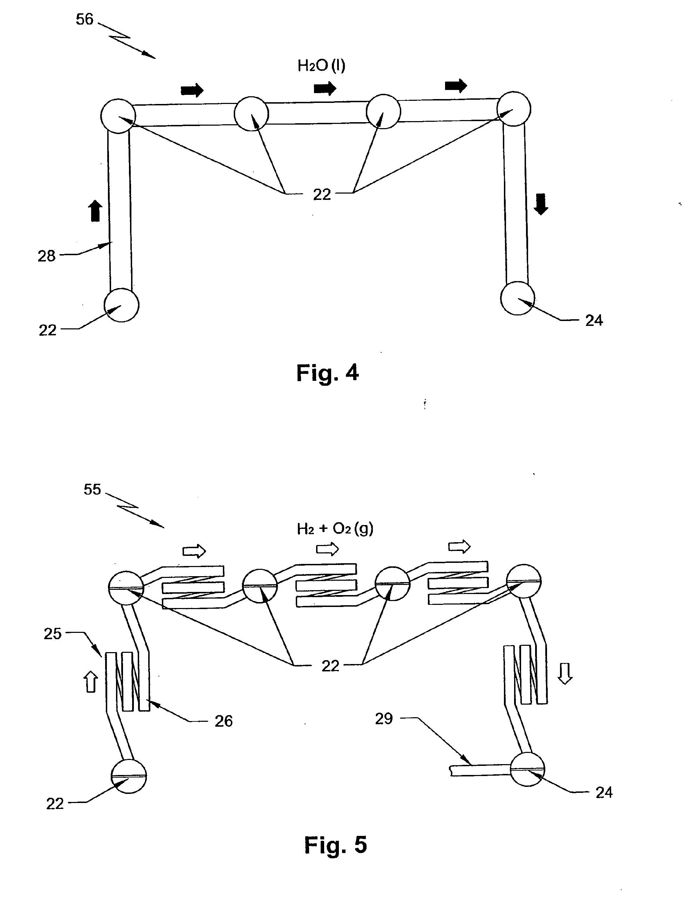

As shown in Figures 4-5, both the lower circuit (56) and upper circuit (55) comprise five conduits joined to each other, (28) and (25) respectively, forming a "u" shaped given that between the first and second and between the last and an outward conduit there is a right angle in order to maximise the reduced size of the equipment.

Again with reference to figures 4-5, the conduits (28) forming the lower circuit (56) have a larger cross-section to the conduits (25) forming the upper circuit (55). Moreover the fluids in both circuits flow in the same direction.

Figure 5 shows that the curved section (26) in each of the conduits (25) is formed by two complete turns.

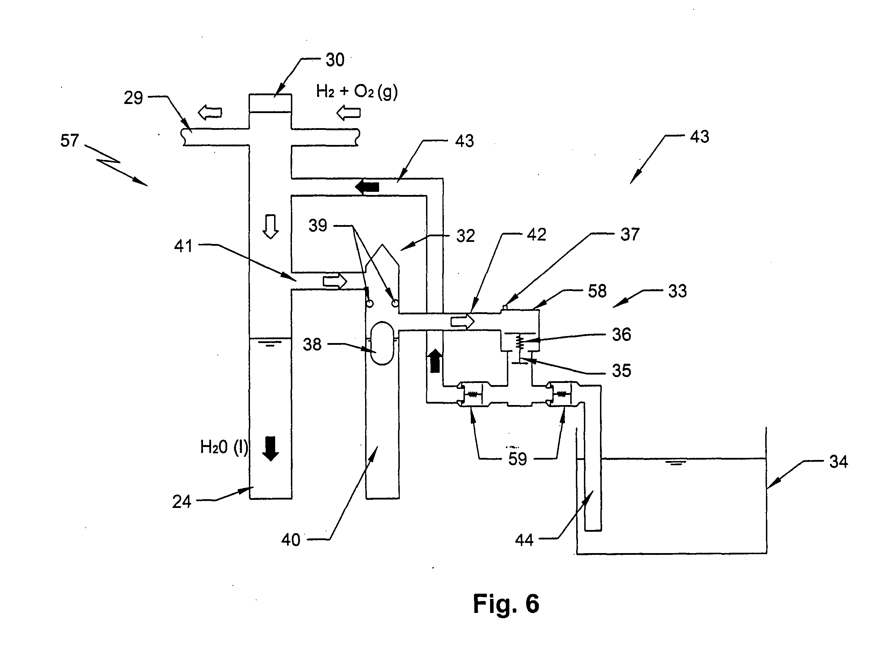

Figure 6 shows the automatic filling means (57) for the distilled water into the container (11) located on the upper section of the general water down conduit to the reactor (24). This comprises mainly a water level regulating valve (32) with a float operating in conjunction with a force pump (33) connected to a distilled water tank (34). This works on the basis of using the outlet gas mixture flow to self pump the required distilled water flow from a distilled water (34) up to the container (11) through the conduit (24).

The aforementioned regulating valve (32) is formed by a slightly enlarged body (40) into which a float is mounted (38) with an O-ring on the upper section (39), equipped with a gas inlet conduit (41) on one side and a union conduit between the valve and the pump (42) on the other side.

The pump (33) is formed by a piston pump (58) working in conjunction with two anti-return valves (59). The aforementioned piston pump (58) comprises a piston (35), which includes a spring (36) and a hole (37) on the upper section of the aforementioned body to remove gases outside the pump (58). The volume of fluid contained in the upper section of the pump (58) is connected via a conduit (42) to the valve (32), whereas the volume of fluid contained in the lower section of the pump (58) is connected via a conduit (44) to the tank (34) and on the other side to the general water down conduit (24), driving the pump (33) by the action of two anti-return valves (59), see figure 6.

The valve (32) semi-submerged in the container (11) of the reactor (10) and contains a water level with a float (38) built-in to allow or to prevent gas from flowing through the said valve (32): when the container (11) is full of electrolytic fluid the float (38) is in its upper position and closes the conduit inlet (42), with the consequent blocking of the passage of gases to the pump (33). For the remaining cases, that it is while the water level in the container (11) is below its maximum level, the float (38) is in its intermediate position inside the valve body (40) to allow gases to pass through to the pump (33).

In the specific case shown in figure 6, the water level in the container (11) and the float (38) floating at that level is at an intermediate position within the valve (32), allowing the outlet gases to pass through the conduit (41), entering the body (40) of the valve (32) and then being taken by the conduit (42) to the upper section of the piston pump (58). Due to the difference in pressures on both sides of the piston (35), the pump (58) together with the anti-return valves (59) drive a certain water flow rate from the distilled water tank (34) through the water loading conduit (43) directly to the general down conduit (24), specifically the section (24) occupied by gases.

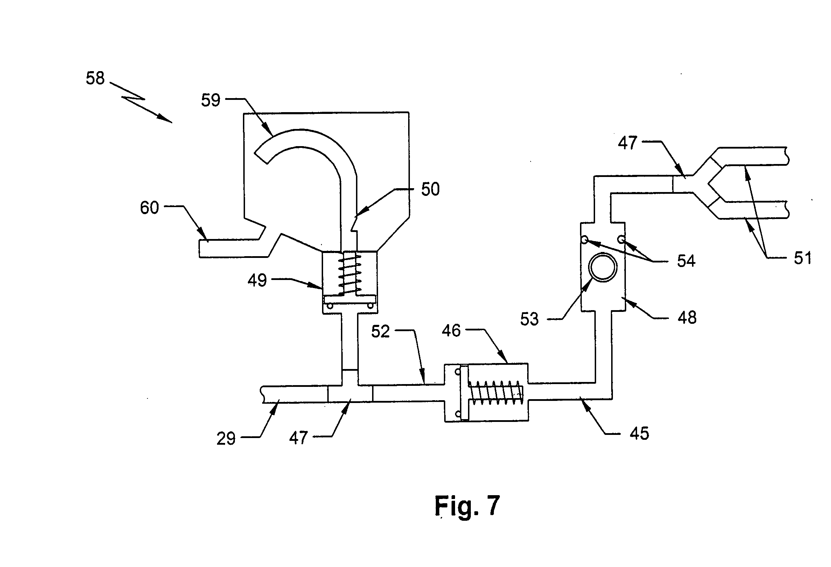

With reference to Figure 7, the equipment's outlet gas self regulating means (58) may be seen connected to the gas outlet conduit (29) on the upper conduit circuit (55), just before the equipment's external gas outlet. These means (58) include a pressure safety valve (49) connected in parallel in the gas outlet conduit (29) and pressure regulating valve (46) and water safety valve (48) connected in series with the aforementioned conduit (29).

The gas outlet conduit (29) is connected to the pressure safety valve (49) by a T-junction (47), which is itself connected to a sound alarm (50), which goes off in the event of outlet gases exceeding the maximum stipulated pressure. When the gas pressure exceeds the maximum value, the alarm is set off (50) and the gases are removed via the conduit (59) to outside of the equipment thereby rapidly reducing pressure inside the equipment. Moreover, if the gas outlet conduit (29) releases liquid water instead of gas, this water does not exit by the gas line but the water safety valve (48) retains its in the conduit (29) and returns it to the tank (34) via the conduit (60).

The pressure regulating valve (46) is connected on one side to the pressure valve (49) via the intermediate conduit (52) and on the other side to the water safety valve (48) via conduit (45).

The aforementioned water safety valve (48) includes a spherical device (53) and two stops (54) on the upper section of the valve (48), so that when gas passes through the valve the spherical device (53) floats because of its density and allows gas pass through.

Connected to the water safety valve outlet (48) by a T-junction (47) there are two gas outlet conduits in parallel (51) to the outside of the equipment.

Having sufficiently described this invention using the Figures attached, it is easy to understand that any changes judged to be suitable may be made, whenever these changes do not alter of the essence of the invention summarised in the following claims.

## Claims

1. "EQUIPMENT AND PROCEDURE TO OBTAIN GASES VIA ELECTROLYSIS OF WATER", these gases are a dry gaseous mixture of hydrogen and oxygen generated by electrolysing water in a sealed electrochemical reactor formed by a container filled with a solute, solvents and suspensions containing one cathode and one anode as a minimum plus an outlet for a wet gaseous mixture of hydrogen and oxygen, **characterised by** the fact that it contains:
- an electrolytic reactor (10) formed by an aligned electrolytic cell with a slightly polyhedral shape containing conductive or semiconductive plates inside (16). These are laid out in parallel with each other and interspersed with an insulating separator plate (17) between two contiguous plates (16), directly or indirectly connecting the two plates located on the ends (13) to a power source which applies a different power between these plates so that the remaining plates (16) in between the two and plates (13) are positively charged (+) on one of their sides and negatively charged (-) on the other; there is an electrolytic fluid input on the lower part of the reactor (10) and a gas outlet on the upper part of the reactor (10);
- dehumidifier means (31) to condense water vapour contained in the gaseous mixture in the reactor outlet (10), which are self cooling to chill condensed water returning to the reactor (10), and at the same time to prevent flames from propagating inside the equipment once such a flame has been created;
- means of automatic filling (57) the reactor (10) with water from a distilled water tank (34) in accordance with the electrolytic fluid requirements (water plus electrolyte) of the reactor (10);
- means of self-regulating (58) pressure in the equipments gaseous mixture outlet; and
- means of self regulating the temperature of the gaseous mixture inside the reactor (10).

2. "EQUIPMENT AND PROCEDURE TO OBTAIN GASES VIA ELECTROLYSIS OF WATER" according to the Claim 1, **characterised by** the fact that the electrolytic reactor (10) comprises a container (11) with a slightly polyhedral body with the front base missing containing a front cover plate (18) which perfectly matches the front gap to close off the reactor (10). The container (11) has a protruding perimeter edge (12) over the corners of the four opposing sides (61) of the container (11) forming the rear face (62) of the container (11) with the perimeter edge (12) extending perpendicularly to these side faces (61).

3. "EQUIPMENT AND PROCEDURE TO OBTAIN GASES VIA ELECTROLYSIS OF WATER" according to the Claims 1 and 2, **characterised by** the fact that the reactor (10) has a seal joint (14) which perfectly matches the front surface of the perimeter edge (12) of the container (11), placed between this age (12) and the front cover plate (18).

4. "EQUIPMENT AND PROCEDURE TO OBTAIN GASES VIA ELECTROLYSIS OF WATER" according to the Claim 1, **characterised by** the fact that the front cover plate (18) near to its edge, the seal joint (14) along its length and the container (11) on its protruding perimeter edge (12) of the reactor (10) has a plurality of holes (15) placed in line, the function of which is to slot into each other to receive safety and seal bolts (63) through the front cover plate (18), the seal joint (14) and the edge (12) of the container (11) to close the front of the reactor (10).

5. "EQUIPMENT AND PROCEDURE TO OBTAIN GASES VIA ELECTROLYSIS OF WATER" according to the Claim 1, **characterised by** the fact that the electrolytic fluid inlet in the reactor (10) is located on the lower part of the rear face (62) of the container (11) and the gas outlet in the reactor (10) is located on the upper part of the rear face (62) of the container (11).

6. "EQUIPMENT AND PROCEDURE TO OBTAIN GASES VIA ELECTROLYSIS OF WATER" according to the Claim 1, **characterised by** the fact that means connected to the reactor outlet (10) for dehumidifying process, condensing water, self cooling and flame propagation barrier functions (31) include an upper circuit of conduits (55) through which the gaseous mixture circulates to be condensed by heat transfer with the exterior air and a lower circuit of conduits (56) to collect the condensed water, which are joined to each other using intermediate conduits (23), forming the upper circuit (55) by a plurality of conduits (25) running along the upper section and connected in series. These are fitted with sections where the pipes are curved with a minimum of one curved section (26) per upper conduit (25). The conduits (25) end in the gas outlet conduit (29), forming the lower circuit (56) with a plurality of conduits (28) laid out in series along the lower section of the equipment ending in the general water collection conduit (24) which is the outlet for the electrolytic fluid in the reactor (10).

7. "EQUIPMENT AND PROCEDURE TO OBTAIN GASES VIA ELECTROLYSIS OF WATER" according to the claims 1 and 6, **characterised by** the fact that there is a minimum of one curved section (26) on each lower duct (25) which includes the upper circuit of conduits (55).

8. "EQUIPMENT AND PROCEDURE TO OBTAIN GASES VIA ELECTROLYSIS OF WATER" according to the claims 1, 6 and 7, **characterised by** the fact that the curved sections (26) on the upper circuit (55) are coiled by at least one turn.

9. "EQUIPMENT AND PROCEDURE TO OBTAIN GASES VIA ELECTROLYSIS OF WATER" according to the claims 1 and 6, **characterised by** the fact that the two contiguous conduits between the upper circuits (55) and the lower circuits (56) may have angles other than a straight angle.

10. "EQUIPMENT AND PROCEDURE TO OBTAIN GASES VIA ELECTROLYSIS OF WATER" according to the claims 1 and 6, **characterised by** the fact that there is a gas up conduit (22) connecting the gas outlet in the reactor (10) with the start of the upper conduit circuit (55).

11. "EQUIPMENT AND PROCEDURE TO OBTAIN GASES VIA ELECTROLYSIS OF WATER" according to the claims 1 and 6, **characterised by** the fact that it includes a stop (30) in the end of the upper general water down conduit (24) to allow electrolytic fluid to be placed in the reactor (10) by hand.

12. "EQUIPMENT AND PROCEDURE TO OBTAIN GASES VIA ELECTROLYSIS OF WATER" according to the claims 1 and 6, **characterised by** the fact that the number of conduits in the upper circuit (55) and lower circuit (56) is the same and has one conduit as a minimum.

13. "EQUIPMENT AND PROCEDURE TO OBTAIN GASES VIA ELECTROLYSIS OF WATER" according to the claims 1 and 6, **characterised by** the fact that the section of the upper conduits (25) which comprise the upper circuit (55) is smaller than the cross section of the lower conduits (28) comprising the lower circuit (56).

14. "EQUIPMENT AND PROCEDURE TO OBTAIN GASES VIA ELECTROLYSIS OF WATER" according to the claims 1 and 6, **characterised by** the fact that the intermediate water down conduits (23), the gas up conduit (22) and general water collection conduit (24) are filled with electrolytic fluid (water plus electrolyte) in its lower section and by a gaseous mixture (hydrogen and oxygen gas) in its upper section.

15. "EQUIPMENT AND PROCEDURE TO OBTAIN GASES VIA ELECTROLYSIS OF WATER" according to the claims 1 and 6, **characterised by** the fact that the flow of the gases through the upper circuit of conduits (55) and the water flow through the lower conduit circuit (56) are in the same direction.

16. "EQUIPMENT AND PROCEDURE TO OBTAIN GASES VIA ELECTROLYSIS OF WATER" according to the claim 1, **characterised by** the fact that means of automatically filling (57) the reactor (10) with water are located in the upper section of the general water down conduit (24) and include a water level regulating valve (32) connected to a pump (33) and the pump (33) connected to a distilled water tank (34), which uses the flow of the "dry" gas mixture from the upper circuit outlet as a means of self pumping the required distilled water flow from the distilled water tank (34) to the reactor (10), covering the closing or opening of the valve (32) in accordance with the electrolytic fluid level in the reactor (10).

17. "EQUIPMENT AND PROCEDURE TO OBTAIN GASES VIA ELECTROLYSIS OF WATER" according to the claims 1 and 16, **characterised by** the fact that the pump (33) in the system (57) for the automatic filling of water in the reactor (10) is a suction pump and includes a piston pump (58) and two anti-return valves (59) connected to the lower part of the aforementioned pump (58).

18. "EQUIPMENT AND PROCEDURE TO OBTAIN GASES VIA ELECTROLYSIS OF WATER" according to the claims 1 and 16, **characterised by** the fact that the water level regulating valve (32) in the automatic water filling system (57) in the reactor (10) has a float and is connected below to one of the reactor's (10) sides. This is half filled with electrolytic fluid and comprises a body (40) which is slightly elongated and fitted with a gas inlet on one side and a gas outlet on the other connecting the valve (32) to the pump (33) by a conduit (42), and the valve (32) houses a float (38) which floats on fluid inside the valve (38) plus an O-ring (39) located in a fixed position on the upper section of the valve (32), so that when the electrolytic fluid level in the reactor (10) rises above its upper limit, the level of the valve (38) rises in the same proportion and the float (38) butts up against the O-ring (39) and then blocks the passage of gas through the valve (32) and prevents the distilled water being pumped from the tank (34) to the reactor (10).

19. "EQUIPMENT AND PROCEDURE TO OBTAIN GASES VIA ELECTROLYSIS OF WATER" according to the claims 1, 16 and 17, **characterised by** the fact that the piston pump (58) which comprises the pump (33) in the system (57) for the automatic filling of the water in the reactor (10) is formed by a piston (35) which includes a spring (36), forming two areas inside the pump (58): one on the upper section and the other on the lower section of the piston (35), and includes a small opening or hole (37) in the upper section of the pump (58) in order to evacuate the gas in the upper area of the pump (58) thereby returning the piston (35) to its upper position.

20. "EQUIPMENT AND PROCEDURE TO OBTAIN GASES VIA ELECTROLYSIS OF WATER" according to the claims 1, 16, and 17 **characterised by** the fact that the lower section of the piston pump (58) comprising the pump (33) for the automatic water filling system (57) in the reactor (10) is connected in parallel to two anti-return valves (59): the first of these valves (59) is located in the conduit (44) which closes off the distilled water tank (34), the other valve (59) is located in the filling conduit (43), which connects the conduit (44) with the general water down conduit (24).

21. "EQUIPMENT AND PROCEDURE TO OBTAIN GASES VIA ELECTROLYSIS OF WATER" according to the claim 1, **characterised by** the fact that alternatively the middle (57) of automatic water filling system in the reactor (10) from the distilled water tank (34) may comprise any electrical or electronic device.

22. "EQUIPMENT AND PROCEDURE TO OBTAIN GASES VIA ELECTROLYSIS OF WATER" according to the claim 1, **characterised by** the fact that means of (58) self-regulating pressure in the gaseous mixture connected to the gas outlet conduit (29) in the upper conduit circuit (55), just before the equipment's external outlet, include a pressure safety valve (49) connected in parallel with the aforementioned conduit (29) a pressure regulating valve (46) connected in series with the water safety valve (48).

23. "EQUIPMENT AND PROCEDURE TO OBTAIN GASES VIA ELECTROLYSIS OF WATER" according to claims 1 and 22, **characterised by** the fact that the pressure valve (49) for these self regulating pressure means (58) for the gaseous mixture is connected to the gas outlet conduit (29) by a T-junction (47), and is connected to an alarm (50), which goes off when outlet gases exceed the maximum stipulated pressure, this valve is also connected to the gas outlet conduit outside the equipment (59) in order to remove gases if pressure he is above the stipulated pressure, it also has a water return conduit (60) to the tank (34) to remove water.

24. "EQUIPMENT AND PROCEDURE TO OBTAIN GASES VIA ELECTROLYSIS OF WATER" according to the claims 1 and 22, **characterised by** the fact that the pressure regulator valve (46) including the means (58) of self-regulating the gas mixture pressure is connected in series with the gas outlet conduit (29) via the middle conduit (52) and on the other side to the water blocking valve (48) through the conduit (45).

25. "EQUIPMENT AND PROCEDURE TO OBTAIN GASES VIA ELECTROLYSIS OF WATER" according to the claims 1 and 22, **characterised by** the fact that the water blocking valve (48) containing the means (58) for self-regulating the gas mixture pressure includes a spherical device (53) which moves within the valve (48) and two fixed stops (54) on the upper section of the valve (48), so that when the gas passes through the valve (48) the spherical device (53) floats allowing the gas to pass through to the equipment's outlet; however, if water passes through the spherical device (53) it lifts until it butts up against the stops (54) to prevent the passage of water to the equipment's gas line.

26. "EQUIPMENT AND PROCEDURE TO OBTAIN GASES VIA ELECTROLYSIS OF WATER" according to the claims 1 and 22, **characterised by** the fact that there are two gas outlet conduits in parallel (51) to outside the equipment connected to the water blocking valve outlet (48) via a junction (47).

27. "EQUIPMENT AND PROCEDURE TO OBTAIN GASES VIA ELECTROLYSIS OF WATER" according to the claim 1, **characterised by** the fact that the means of temperature self-regulation include an electro-thermal fuse (19) located near to one of the edges on the front cover plate (18) of the reactor (10), to self-regulate the temperature inside the reactor (10): interrupting the electrical current passing through the conductor plates (16) in the event that the gas temperature in the reactor (10) exceeds the preset limit or in the event of an electrical fault.

28. "EQUIPMENT AND PROCEDURE TO OBTAIN GASES VIA ELECTROLYSIS OF WATER" according to the claim 1, **characterised by** the fact that the equipment is compact and portable in shape in a housing.

29. "EQUIPMENT AND PROCEDURE TO OBTAIN GASES VIA ELECTROLYSIS OF WATER" according to the claims 1 and 28, **characterised by** the fact that the housing is made from cellular polycarbonate.

30. "EQUIPMENT AND PROCEDURE TO OBTAIN GASES VIA ELECTROLYSIS OF WATER" according to the claims 1 and 28, **characterised by** the fact that means of transport are built into the housing including wheels and several accessories such as handles or stoppers.

31. "EQUIPMENT AND PROCEDURE TO OBTAIN GASES VIA ELECTROLYSIS OF WATER" according to the claim 1, **characterised by** the fact that the equipment does not include any accessory such as burners, but has been designed to have standard burners fitted.

32. "PROCEDURE TO OBTAIN GASES VIA ELECTROLYSIS OF WATER", **characterised by** the fact that it comprises:
- an electrochemical reactor (10) to obtain a gaseous mixture of hydrogen and oxygen which is filled with a solute, solvent and suspensions with a plurality of semiconductive or conductive plates inside (16) laid out in parallel and interspersed with an insulating plate (17) between each of the two contiguous plates (16) so that when an indirect or direct power source is connected between the two plates located at the ends (13) the remaining plates (16) are automatically positively (+) charged on one of its sides and negatively charged (-) on the other side forming hydrogen gas (H₂) on all negatively (-) charged sides and oxygen gas (O₂) on all positively (+) charged sides of the plates (16), with these hydrogen (H₂) and gas oxygen (O₂) gases mixing to form oxyhydrogen gas inside the reactor (10);
- means of dehumidifying to automatically condensed the water vapour contained in the gaseous mixture, for self cooling to cool the condensed water and to cut off flames to prevent the propagation of flames connected to the gas outlet on the reactor (10). This is based on channelling the gaseous mixture through narrow upper conduits (25) containing curved sections (26), so that the fluid is gradually cooled due to heat transfer by conduction and convection with the outside air, causing the moisture contained in the gaseous mixture to condense along the aforementioned pipes (25) with the condensed water accumulating in these curved sections (26) and the remaining water collecting in the lower conduits (28) forming the lower circuit (56), transporting the water to the general watered-down conduit (24) to the reactor (10);
- means of self filling the reactor (10) which include a water level regulating valve (32) operating jointly with a pump (33). This is based on using the gaseous mixture fluid in the outlet as a means of continuously self pumping the required distilled water flow rate from the distilled water tank (34) to the reactor (10) and controlling the opening or closing of the valve (32) in accordance with the electrolytic fluid level in the reactor (10);
- means of self-regulating the pressure of the gaseous mixture inside the equipment consisting of a pressure safety valve (49), a pressure regulating valve (46) and a safety valve to block the water outlet (48), which makes use of the outlet gas flow before the gas line in order to self regulate gas pressure inside the equipment; and
- means of self regulating the temperature of the gaseous mixture inside the reactor (10) which includes an electro-thermal fuse (19) located near to one of the corners of the front cover plate (18) on the reactor (10), the function of which is to break electrical current passing through the conductive plates (16) located in the reactor (10) when the gas temperature exceeds a preset limit in the reactor (10) or in the event of an electrical fault.
